# EUROPEAN PATENT SPECIFICATION

(11) **EP 2 775 763 B1**
(45) Date of publication and mention of the grant of the patent: **11.07.2018**
(21) Application number: 14157747.8
(22) Date of filing: 05.03.2014
(51) Int. Cl.: H04W 48/20

(54) **Method of handling selections of base stations**
Verfahren zur Handhabung der Auswahl von Basisstationen
Procédé de manipulation de sélections de stations de base

(30) Priority: 06.03.2013 US 201361773157 P; 25.02.2014 US 201414188702
(43) Date of publication of application: 10.09.2014
(73) Proprietor: Acer Incorporated, New Taipei City 221 (TW)
(72) Inventor: Wei, Hung-Yu, 221 New Taipei City (TW)
(74) Representative: Becker Kurig Straus

(56) References cited:
- US-A1- 2009 264 123
- QUALCOMM EUROPE: "Uplink Channel Measurements in Neighboring Cells", 3GPP DRAFT; R2-073301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20070815, 15 August 2007 (2007-08-15), XP050136017, [retrieved on 2007-08-15]
- NTT DOCOMO ET AL: "Use of cell specific offsets and reading neighbour BCH", 3GPP DRAFT; R2-072721 DL-UL IMBALANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Orlando, USA; 20070622, 22 June 2007 (2007-06-22), XP050135507, [retrieved on 2007-06-22]

## Description

### Background of the Invention

A long-term evolution (LTE) system supporting the 3rd Generation Partnership Project (3GPP) Rel-8 standard and/or the 3GPP Rel-9 standard have been developed by the 3GPP as a successor of the universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, UL multiple-input multiple-output (MIMO), etc. For a UE and an eNB to communicate with each other in the LTE-A system, the UE and the eNB must support standards developed for the LTE-A system, such as the 3GPP Rel-10 standard or later versions.

In certain situations, a UE is in coverage areas of multiple base stations which may be NBs, eNBs, relay stations and/or remote radio heads (RRHs)), etc. That is, the coverage areas are usually partly overlapped or completely overlapped. It is important for the UE to select a proper base station from the base stations for performing transmissions and/or receptions with the base station. In general, the UE selects a base station having the best signal quality for performing the transmissions and receptions. However, the base station may not be the best choice for the UE due to various conditions, e.g., a traffic loading of the base station.

Thus, how to assist the UE to select one or more proper base stations is an important problem to be solved.

Document US 2009/264123 discloses techniques for selecting a serving base station for a terminal by taking into consideration the backhaul quality of candidate base stations. In one design, a base station may determine backhaul quality information indicative of its current backhaul quality.

The base station may send the backhaul quality information, e.g., in an overhead message sent over the air to terminals or in a backhaul message sent to neighbor base stations or a network controller. A server selection entity may receive backhaul quality information for at least one candidate base station for the terminal. The server selection entity may also determine at least one metric for each candidate base station. The server selection entity may then select the serving base station for the terminal based on the backhaul quality information and the at least one metric for the at least one candidate base station.

Document "Uplink Channel Measurements in Neighboring Cells". Qualcomm Europe, discloses a handover granting procedure and point out inherent limitations of the existing method. Specifically, the document focuses on the lack of uplink channel measurement information at the serving eNode B and the consequences on the handover granting algorithm.

However, the documents do not disclose how to select a base station according to an offset of a signal quality. Thus, a method for selecting the base station according to the offset is still unknown.

### Summary of the Invention

The present invention therefore provides a method and related communication system according to the appended independent claims for handling selections of base stations to solve the abovementioned problem.

This is achieved by a method and a communication system for handing selections of base stations according to the independent claims here below. The dependent claims pertain to corresponding further developments and improvements.

As will be seen more clearly from the detailed description following below, the claimed method of handling selections of base stations for a network comprises the steps of determining an uplink (UL) offset of a UL signal quality for a UL base station of the network, for a communication device to select the UL base station from a plurality of base stations of the network according to the UL offset and the UL signal quality for performing a transmission to the UL base station; determining a downlink (DL) offset of a DL signal quality for a DL base station of the network, for the communication device to select the DL base station from the plurality of base stations according to the DL offset and the DL signal quality for performing a reception from the DL base station; and transmitting the UL offset and the DL offset to the communication device.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a schematic diagram of a wireless communication system according to an example of the present invention.
Fig. 5 is a schematic diagram of a wireless communication system according to an example of the present invention.

### Detailed Description

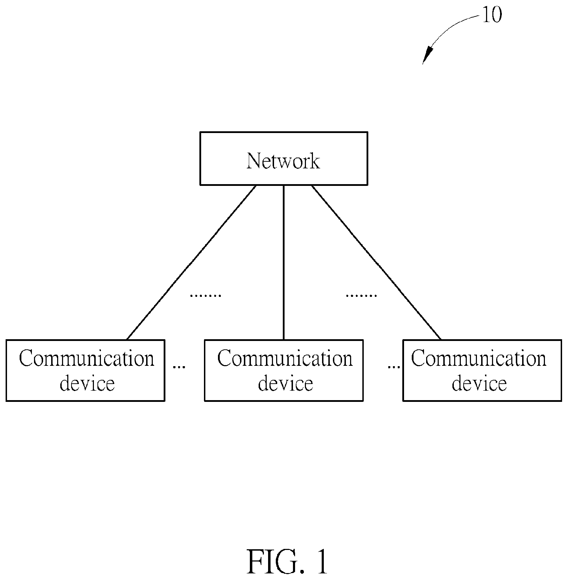

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. Practically, the network can be a universal terrestrial radio access network (UTRAN) comprising a plurality of Node-Bs (NBs) in a universal mobile telecommunications system (UMTS). In another example, the network can be an evolved UTRAN (E-UTRAN) comprising a plurality of evolved NBs (eNBs) and/or relay stations in a long term evolution (LTE) system, a LTE-Advanced (LTE-A) system or an evolution of the LTE-A system. That is, the network may include NBs, eNBs, relay stations and/or remote radio heads (RRHs). In addition, the network may also include base stations (e.g., access points (APs)) conforming to a wireless standard, such as IEEE 802.11 IEEE 802.16, etc. In other words, a communication device may be in coverage areas of multiple base stations conforming to one or more standards, and is not limited herein.

Furthermore, the network can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network. A communication device can be a user equipment (UE), a machine type communication (MTC) device, a mobile phone, a laptop, a tablet computer, an electronic book or a portable computer system. In addition, the network and the communication device can be seen as a transmitter or a receiver according to direction, e.g., for an uplink (UL), the communication device is the transmitter and the network is the receiver, and for a downlink (DL), the network is the transmitter and the communication device is the receiver.

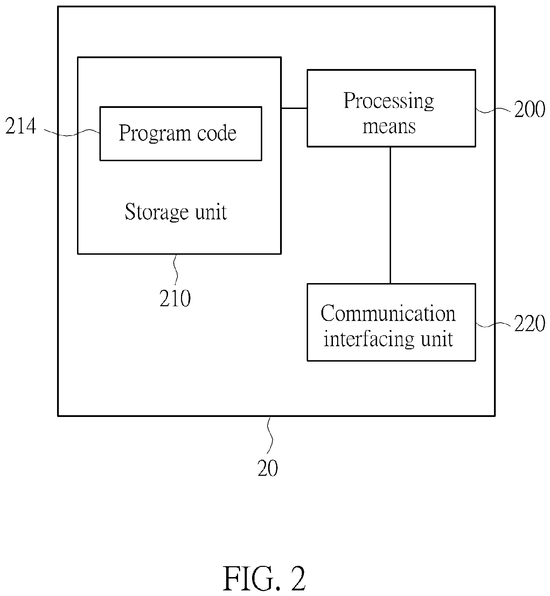

Please refer to Fig. 2, which is a schematic diagram of a communication device 20 according to an example of the present invention. The communication device 20 can be a communication device, a base station of the network and/or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store a program code 214, accessed and executed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 220 is preferably a transceiver and is used to transmit and receive signals (e.g., messages or packets) according to processing results of the processing means 200.

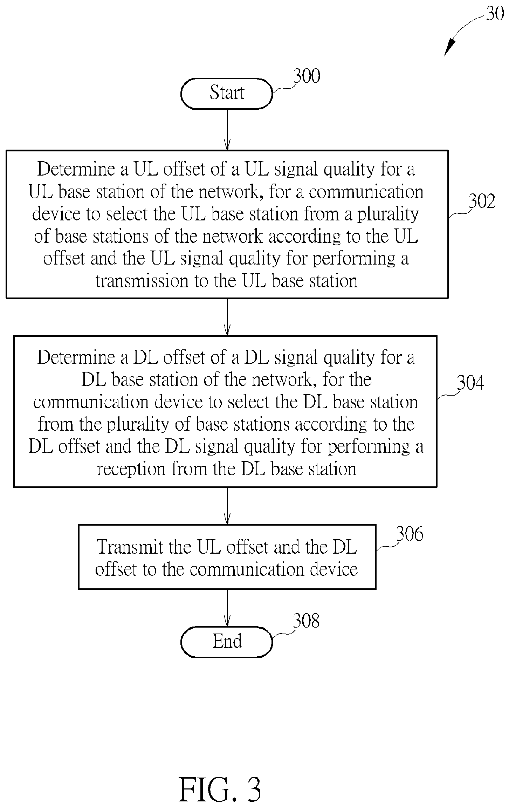

Please refer to Fig. 3, which is a flowchart of a process 30 according to an example of the present invention. The process 30 can be utilized in the network shown in Fig. 1, for handling selections of base stations in the network. The process 30 may be compiled into the program code 214 and includes the following steps:
Step 300: Start.
Step 302: Determine a UL offset of a UL signal quality for a UL base station of the network, for a communication device to select the UL base station from a plurality of base stations of the network according to the UL offset and the UL signal quality for performing a transmission to the UL base station.
Step 304: Determine a DL offset of a DL signal quality for a DL base station of the network, for the communication device to select the DL base station from the plurality of base stations according to the DL offset and the DL signal quality for performing a reception from the DL base station.
Step 306: Transmit the UL offset and the DL offset to the communication device.
Step 308: End.

According to the process 30, the network determines a UL offset of a UL signal quality (hereinafter UL offset for short) for a UL base station of the network, for a communication device to select the UL base station from a plurality of base stations of the network according to the UL offset and the UL signal quality for performing a transmission to the UL base station. In addition, the network determines a DL offset of a DL signal quality (hereinafter DL offset for short) for a DL base station of the network, for the communication device to select the DL base station from the plurality of base stations according to the DL offset and the DL signal quality for performing a reception from the DL base station. Then, the network transmits the UL offset and the DL offset to the communication device. The communication device can determine the UL base station according to both the UL offset and the UL signal quality, and can determine the DL base station according to both the DL offset and the DL signal quality, after receiving the UL offset and the DL offset. Thus, the communication device can select proper base stations for performing transmissions and receptions, when the UL offset and the DL offset are determined properly according to one or more traffic conditions. As a result, throughput of the communication device is improved.

Realization of the present invention is not limited to the above description.

For example, a signal quality (e.g., UL signal quality and/or DL signal quality) may be a parameter such as a signal strength, a signal to interference and noise ratio (SINR), a received signal strength indicator (RSSI), a reference signal received power (RSRP), a reference signal received quality (RSRQ), a carrier to interference (C/I) ratio, etc. Further, a signal quality may be determined according to a function of the abovementioned parameters, and is not limited herein. In one example, the communication device may select the UL base station and the DL base station according to the corresponding offsets and the corresponding signal qualities in a cell selection procedure in the process 30. The cell selection procedure may be a network entry, a network re-entry and/or a handover. In one example, the UL base station and the DL base station in the process 30 may be different base stations. That is, the communication device performs a transmission (e.g., of a packet, a message and/or control information) to a base station, and performs a reception (e.g., of a packet, a message and/or control information) from another base station. In this situation, the UL base station and the DL base station may need to exchange information related to the communication device via a backhaul link. In another example, the UL base station and the DL base station in the process 30 may be the same base station. That is, the communication device may select the same base station according to the corresponding offsets and the corresponding signal qualities for performing both the transmission and reception, even if the UL offset and the DL offset are different and/or the UL signal quality and the DL signal quality are different. In other words, whether a base station is a UL base station or a DL base station depends on a communication operation performed by the communication device. A base station is a UL base station for a communication device, when the communication device performs a transmission to the base station. A base station is a DL base station for a communication device, when the communication device performs a reception from the base station.

On the other hand, a method according to which the UL offset and/or the DL offset in the process 30 is determined is not limited. For example, the UL offset and/or the DL offset in the process 30 may be determined according to at least one traffic condition. Further, the at least one traffic condition may include a delay of UL traffic, a delay of DL traffic, a buffer status of UL traffic, a buffer status of DL traffic, a history of UL traffic, a history of DL traffic, an amount of UL traffic, an amount of DL traffic, a pattern of UL traffic and/or a pattern of DL traffic. That is, the at least one traffic condition may include any set of the abovementioned parameters. Preferably, traffic conditions related to the UL are used for determining a UL offset, and traffic conditions related to the DL are used for determining a DL offset. In one example, a UL offset and/or a DL offset may be determined according to a performance of mobility management which may include a frequency of handovers, the number of handover failures and/or the number of radio link failures. In one example, a UL offset and/or a DL offset may be determined according to at least one interference caused by at least one neighboring base station. In one example, a UL offset and/or a DL offset may be determined according to at least one transmission power level of at least one neighboring base station.

In addition, a UL offset may be determined according to a type of the UL base station. Similarly, a DL offset may be determined according to a type of the DL base station. Taking the UL offset as an example, the communication device may select a UL base station with a larger probability if a larger UL offset is determined for the UL base station, and the communication device may select a UL base station with a smaller probability if a smaller UL offset is determined for the UL base station. Thus, a larger UL offset may be determined for the UL base station if the UL base station is served as a primary UL base station (e.g., for basic and/or important communication operations), and a smaller UL offset may be determined for the UL base station if the UL base station is served as a secondary UL base station (e.g., for improved and/or extended communication operations). That is, the communication device can perform basic and/or important communication operations easier (e.g., with a fewer number of cell selection failures). In another example, a UL base station may be a macro-cell base station, a pico-cell base station, a small-cell base station or a femto-cell base station with various coverage areas. A UL offset may be determined for the UL base station according to a UL coverage area of the UL base station. It should be noted that whether a base station is a primary UL base station or a secondary UL station may depend on a communication device communicating with the base station. For example, a base station may be a primary UL station for a communication device and may be a secondary UL station for another communication device. In another example, a base station may be a primary UL station for all communication devices. In another example, a base station may be a secondary UL station for all communication devices. The above example can easily applied to the case of a DL base station with a DL offset, and is narrated herein.

In addition, a UL offset may be determined according to a UL traffic loading of the UL base station. Similarly, a DL offset may be determined according to a DL traffic loading of the DL base station. Taking the UL offset as an example, the communication device may select a UL base station with a larger probability if a larger UL offset is determined for the UL base station, and the communication device may select a UL base station with a smaller probability if a smaller UL offset is determined for the UL base station. Thus, a larger UL offset may be determined for the UL base station, if a UL loading of the UL base station is low, e.g., the number of available UL resources at the UL base station is large, a UL buffer of the UL base station is nearly empty, etc. A smaller UL offset may be determined for the UL base station, if a UL loading of the UL base station is high, e.g., the number of available UL resources at the UL base station is small, a UL buffer of the UL base station is nearly full, etc. That is, a UL load balance can be achieved, when the UL offset is determined according to the UL loading of the UL base station. The above example can easily applied to the case of a DL base station with a DL offset to achieve a DL load balance, and is narrated herein.

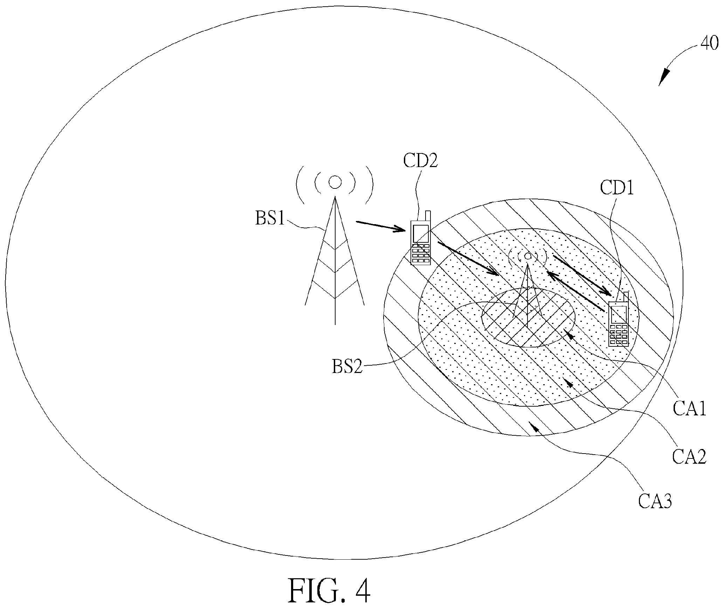

Fig. 4 is a schematic diagram of a wireless communication system 40 according to an example of the present invention. The wireless communication system 40 includes two base stations BS1-BS2 and two communication device CD1-CD2. In the present example, the base station BS2 is in a coverage area of the base station BS1. In other examples, the base station BS2 may be outside the coverage area of the base station BS1, and is not limited herein. According to the previous description, a UL offset Off_U1 and a DL offset Off_D1 are determined for the base station BS1, and a UL offset Off_U2 and a DL offset Off_D2 are determined for the base station BS2. The UL offsets Off_U1 and Off_U2 may be the same or different, and the DL offsets Off_D1 and Off_D2 may be the same or different.

In addition, the communication device CD1 may obtain a UL signal quality SIG_U11 and a DL signal quality SIG_D11 corresponding to a UL channel and a DL channel between the communication device CD1 and the base station BS1, respectively. The communication device CD1 may obtain a UL signal quality SIG_U12 and a DL signal quality SIG_D12 corresponding to a UL channel and a DL channel between the communication device CD1 and the base station BS2, respectively. Similarly, the communication device CD2 may obtain a UL signal quality SIG_U21 and a DL signal quality SIG_D21 corresponding to a UL channel and a DL channel between the communication device CD2 and the base station BS1, respectively. The communication device CD2 may obtain a UL signal quality SIG_U22 and a DL signal quality SIG_D22 corresponding to a UL channel and a DL channel between the communication device CD2 and the base station BS2, respectively. It should be noted that a method according to which a communication device obtains a UL signal quality or a DL signal quality is not limited herein. For example, the communication device may obtain the signal qualities via performing one or more measurements. In another example, the communication device may receive the signal qualities transmitted by the network via a DL control channel.

In one example, the communication device CD1 may select the base station BS2 as a UL base station, if the following equation is true: (Off_U2+SIG_U12)>(Off_U1+SIG_U11). That is, the communication device CD1 selects the base station BS2 according to both the UL offset Off_U2 and the UL signal quality SIG_U12. In addition, the communication device CD1 may select the base station BS2 as a DL base station, if the following equation is true: (Off_D2+SIG_D12)>(Off_D1+SIG_D11). That is, the communication device CD1 selects the base station BS2 according to both the DL offset Off_D2 and the DL signal quality SIG_D12. Thus, the communication device CD1 can perform both transmissions and receptions (e.g., of packets, messages and/or control information) with the base station BS2.

Similarly, the communication device CD2 may select the base station BS2 as a UL base station, if the following equation is true: (Off_U2+SIG_U22)>(Off_U1+SIG_U21). In addition, the communication device CD2 may select the base station BS1 as a DL base station, if the following equation is true: (Off_D1+SIG_D21)>(Off_D2+SIG_D22). Thus, the communication device CD2 can perform transmissions and receptions (e.g., of packets, messages and/or control information) with the base station BS2 and the base station BS1, respectively.

It should be noted that a DL offset for a base station corresponds to an extension of an original DL coverage area of the base station, and a UL offset for the base station corresponds to an extension of an original UL coverage area of the base station. As shown in Fig. 4, coverage areas CA1-CA3 are an original coverage area of the base station BS2, a DL coverage area of the base station BS2 and a UL coverage area of the base station BS2, respectively. It is assumed in the example that the UL coverage area of the base station BS2 is larger than the DL coverage area of the base station BS2. Thus, the communication device CD1 selects the base station BS2 as both the UL base station and the DL base station, because the communication device CD1 is in both the UL coverage area and the DL coverage area of the base station BS2. In addition, the communication device CD2 selects the base station BS2 and the base station BS1 as the UL base station and the DL base station, respectively, because the communication device CD2 is in the UL coverage area of the base station BS2 and is in a DL coverage area of the base station BS1. Note that a UL coverage area of the base station BS1 and the DL coverage area of the base station BS1 are assumed to be the same in the present example.

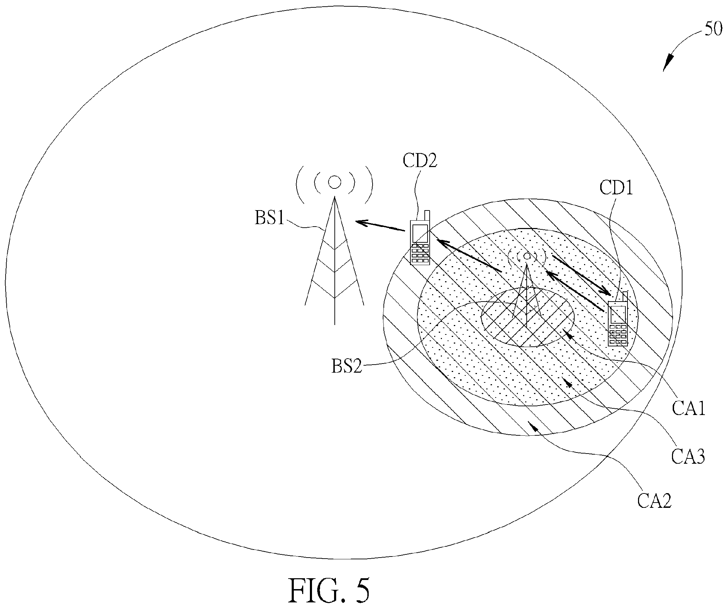

Fig. 5 is a schematic diagram of a wireless communication system 50 according to an example of the present invention. The base stations BS1-BS2, the communication devices CD1-CD2, the UL offsets Off_U1 and Off_U2, the DL offsets Off_D1 and Off_D2, the UL signal qualities SIG_U11 and SIG_U22 and the DL signal qualities SIG_D11 and SIG_D22 in the above description are reused for Fig. 5, and are not narrated herein.

Similarly, the communication device CD1 may select the base station BS2 as a UL base station, if the following equation is true: (Off_U2+SIG_U12)>(Off_U1+SIG_U11). That is, the communication device CD1 selects the base station BS2 according to both the UL offset Off_U2 and the UL signal quality SIG_U12. In addition, the communication device CD1 may select the base station BS2 as a DL base station, if the following equation is true: (Off_D2+SIG_D12)>(Off_D1+SIG_D11). That is, the communication device CD1 selects the base station BS2 according to both the DL offset Off_D2 and the DL signal quality SIG_D12. Thus, the communication device CD1 can perform both transmissions and receptions (e.g., of packets, messages and/or control information) with the base station BS2.

On the other hand, the communication device CD2 may select the base station BS1 as a UL base station, if the following equation is true: (Off_U1+SIG_U21)>(Off_U2+SIG_U22). In addition, the communication device CD2 may select the base station BS2 as a DL base station, if the following equation is true: (Off_D2+SIG_D22)>(Off_D1+SIG_D21). Thus, the communication device CD1 can perform transmissions and receptions (e.g., of packets, messages and/or control information) with the base station BS1 and the base station BS2, respectively.

Similar to Fig. 4, the coverage areas CA1-CA3 are the original coverage area of the base station BS2, the DL coverage area of the base station BS2 and the UL coverage area of the base station BS2, respectively. However, it is assumed in the example that the DL coverage area of the base station BS2 is larger than the UL coverage area of the base station BS2. Thus, the communication device CD2 selects the base station BS1 and the base station BS2 as the DL base station and the UL base station, respectively, because the communication device CD2 is in the DL coverage area of the base station BS2 and is in a UL coverage area of the base station BS1. Note that a UL coverage area of the base station BS1 and the DL coverage area of the base station BS1 are assumed to be the same in the present example.

Those skilled in the art should readily make combinations, modifications and/or alterations on the abovementioned description and examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method of handling selections of base stations. Thus, a communication device can select proper base stations for performing transmissions and receptions, when a UL offset and a DL offset are determined properly. As a result, throughput of the communication device is improved.

## Claims

1. A method of handling selections of base stations for a network the method comprising the steps of:
determining an uplink, UL, offset of a UL signal quality for a UL base station of the network, for a communication device to select the UL base station from a plurality of base stations of the network according to the UL offset and the UL signal quality for performing a transmission to the UL base station (302);
determining a downlink, DL, offset of a DL signal quality for a DL base station of the network, for the communication device to select the DL base station from the plurality of base stations according to the DL offset and the DL signal quality for performing a reception from the DL base station (304); and
transmitting the UL offset and the DL offset to the communication device (306);
wherein the communication device selects the UL base station and the DL base station in a cell selection procedure.

2. The method of claim 1, wherein the UL base station and the DL base station are the same base station.

3. The method of any of claims 1-2, wherein the UL offset and/or the DL offset is determined according to at least one traffic condition.

4. The method of claim 3, wherein the at least one traffic condition comprises a delay of UL traffic, a delay of DL traffic, a buffer status of UL traffic, a buffer status of DL traffic, a history of UL traffic, a history of DL traffic, an amount of UL traffic, an amount of DL traffic, a pattern of UL traffic and/or a pattern of DL traffic.

5. The method of any of claims 1-2, wherein the UL offset and/or the DL offset is determined according to a performance of mobility management.

6. The method of any of claims 1-2, wherein the UL offset and/or the DL offset is determined according to at least one interference caused by at least one neighboring base station.

7. The method of any of claims 1-2, wherein the UL offset and/or the DL offset is determined according to at least one transmission power level of at least one neighboring base station.

8. The method of any of claims 1-2, wherein the UL offset is determined according to a type of the UL base station, or the DL offset is determined according to a type of the DL base station.

9. The method of any of claims 1-2, wherein the UL offset is determined according to a UL traffic loading of the UL base station, or the DL offset is determined according to a DL traffic loading of the DL base station.

10. A communication system configured to handle selections of base stations according to any of claims 1-9.

## Patentansprüche

1. Verfahren zur Handhabung einer Auswahl von Basisstationen für ein Netzwerk, wobei das Verfahren die Schritte umfasst:
Bestimmen einer Uplink, UL, -Abweichung einer UL Signalqualität für eine UL- Basisstation des Netzwerks, so dass ein Kommunikationsgerät die UL- Basisstation aus mehreren Basisstationen des Netzwerks gemäß der UL-Abweichung und der UL Signalqualität auswählt, um eine Übertragung zu der UL-Basisstation (302) durchzuführen;
Bestimmen einer Downlink, DL, -Abweichung einer DL-Signalqualität für eine DL-Basisstation des Netzwerks, so dass das Kommunikatiosgerät die DL-Basisstation unter den mehreren Basisstationen gemäß der DL-Abweichung und der DL-Signalqualität auswählt, um einen Empfang von der DL-Basisstation (304) durchzuführen; und
Übertragen der UL-Abweichung und der DL-Abweichung zu dem Kommunikationsgerät (306);
wobei das Kommunikationsgerät die UL-Basisstation und die DL-Basisstation in einem Zellen-Auswahlverfahren auswählt.

2. Verfahren nach Anspruch 1, wobei die UL-Basisstation und die DL-Basisstation die gleiche Basisstation sind.

3. Verfahren nach einem der Ansprüche 1-2, wobei die UL-Abweichung und/oder die DL-Abweichung bestimmt wird gemäß mindestens einer Traffic-Bedingung.

4. Verfahren nach Anspruch 3, wobei die mindestens eine Traffic-Bedingung eine Verzögerung an UL-Traffic, eine Verzögerung des DL-Traffics, einen Puffer-Status des UL-Traffics, einen Puffer-Status des DL-Traffics, eine Historie des UL-Traffics, eine Historie des DL-Traffics, eine Menge des UL-Traffics, eine Menge des DL-Traffics, ein Muster des UL-Traffics und/oder ein Muster des DL-Traffics umfasst.

5. Verfahren nach einem der Ansprüche 1-2, wobei die UL-Abweichung und/oder die DL-Abweichung bestimmt wird gemäß einer Leistung an Mobilitätsmanagement.

6. Verfahren nach einem der Ansprüche 1-2, wobei die UL-Abweichung und/oder die DL-Abweichung bestimmt wird gemäß mindestens einer Interferenz, die durch mindestens eine benachbarte Basisstation verursacht wird.

7. Verfahren nach einem der Ansprüche 1-2, wobei die UL-Abweichung und/oder die DL-Abweichung bestimmt wird gemäß mindestes einer Übertragungs-Leistungsstufe von mindestens einer benachbarten Basisstation.

8. Verfahren nach einem der Ansprüche 1-2, wobei die UL-Abweichung bestimmt wird gemäß einem Typ der UL-Basisstation, oder wobei die DL-Abweichung bestimmt wird gemäß einem Typ der DL-Basisstation.

9. Verfahren nach einem der Ansprüche 1-2, wobei die UL-Abweichung bestimmt wird gemäß einer UL-Traffic-Belastung der UL Basisstation, oder wobei die DL-Abweichung bestimmt wird gemäß einer DL-Traffic-Belastung der DL-Basisstation.

10. Kommunikationsgerät, das Auswahlverfahren von Basisstationen gemäß einem der Ansprüche 1-9 handhaben kann.

## Revendications

1. Procédé de gestion de sélections des stations de base d'un réseau comprenant les étapes de:
détermination d'un décalage d'une qualité de signal UL d'une liaison montante, UL, pour une station de base de UL du réseau, afin qu'un dispositif de communication sélectionne la station de base de UL à partir d'une pluralité de stations de base du réseau selon le décalage de UL et la qualité du signal de UL pour effectuer une transmission vers la station de base de UL (302);
détermination d'un décalage d'une qualité de signal DL d'une liaison descendante, DL, pour une station de base de DL du réseau, afin que le dispositif de communication sélectionne la station de base de DL parmi la pluralité de stations de base selon le décalage de DL et la qualité du signal de DL pour effectuer une transmission vers la station de base de UL (304) ; et
transmission du décalage de UL et du décalage de DL au dispositif de communication (306) ;
dans lequel le dispositif de communication sélectionne la station de base de UL et la station de base de DL dans une procédure de sélection de cellule.

2. Procédé selon la revendication 1, dans lequel la station de base de UL et la station de base de DL correspondent à la même station de base.

3. Procédé selon l'une des revendications 1 à 2, dans lequel le décalage de UL et/ou le décalage de DL est déterminé selon au moins une condition de trafic.

4. Procédé selon la revendication 3, dans lequel au moins une condition comprend un retard du trafic de UL, un retard du trafic de DL, un état tampon du trafic de UL, un état tampon du trafic de DL, un historique du trafic de UL, un historique du trafic de DL, une quantité de trafic de UL, une quantité de trafic de DL, un modèle de trafic de UL et/ou un modèle de trafic de DL.

5. Procédé selon l'une des revendications 1 à 2, dans lequel le décalage de UL et/ou le décalage de DL est déterminé selon une performance de gestion de la mobilité.

6. Procédé selon l'une des revendications 1 à 2, dans lequel le décalage de UL et/ou le décalage de DL est déterminé selon au moins une interférence provoquée par au moins une station de base voisine.

7. Procédé selon l'une des revendications 1 à 2, dans lequel le décalage de UL et/ou le décalage de DL est déterminé selon au moins un niveau de puissance d'émission d'au moins une station de base voisine.

8. Procédé selon l'une des revendications 1 à 2, dans lequel le décalage de UL est déterminé selon le type de station de base de UL, ou le décalage de DL est déterminé selon le type de station de base de DL.

9. Procédé selon l'une des revendications 1 à 2, dans lequel le décalage UL est déterminé selon la charge de trafic de UL de la station de base de UL, ou le décalage DL est déterminé selon la charge de trafic de DL de la station de base de DL.

10. Dispositif de communication configuré pour gérer les sélections des stations de base selon l'une des revendications 1 à 9.
